# EUROPÄISCHE PATENTSCHRIFT

(11) **EP 2 909 122 B1**
(45) Veröffentlichungstag und Bekanntmachung des Hinweises auf die Patenterteilung: **23.05.2018**
(21) Anmeldenummer: 13779813.8
(22) Anmeldetag: 18.10.2013
(51) Int. Cl.: B66B 5/06

(54) **SICHERHEITSEINRICHTUNG EINER AUFZUGSANLAGE**
SAFETY DEVICE FOR A LIFT SYSTEM
DISPOSITIF DE SÉCURITÉ D'UNE INSTALLATION D'ASCENSEUR

(30) Priorität: 18.10.2012 EP 12189011
(43) Veröffentlichungstag der Anmeldung: 26.08.2015
(73) Patentinhaber: Inventio AG, 6052 Hergiswil (CH)
(72) Erfinder: ANNEN, Mirco, CH-6403 Küssnacht am Rigi (CH); MICHEL, David, CH-8800 Thalwil (CH)
(86) Internationale Anmeldenummer: PCT/EP2013/071865
(87) Internationale Veröffentlichungsnummer: WO 2014/060587

(56) Entgegenhaltungen:
- WO-A1-00/39016
- WO-A1-2010/107409
- JP-A- 2009 023 823

## Beschreibung

Die Erfindung betrifft ein Verfahren zum Überwachen der Bewegung der Aufzugskabine und eine Sicherheitseinrichtung zur Durchführung des Verfahrens.

Die Aufzugsanlage ist in einem Gebäude ein- oder an dieses angebaut. Sie besteht im Wesentlichen aus einer Kabine, welche über Tragmittel mit einem Gegengewicht oder mit einer zweiten Kabine verbunden ist. Mittels eines Antriebs, der wahlweise auf die Tragmittel oder direkt auf die Kabine oder das Gegengewicht einwirkt, wird die Kabine entlang von, im Wesentlichen vertikalen, Führungsschienen verfahren. Die Aufzugsanlage wird verwendet um Personen und Güter innerhalb des Gebäudes über einzelne oder mehrere Etagen hinweg zu befördern.
Die Aufzugsanlage beinhaltet Vorrichtungen um die Aufzugskabine im Falle des Versagens des Antriebs, der Tragmittel oder anderen Aufzugskomponenten zu sichern. Dieses Sichern beinhaltet in der Regel mehrere Sicherheitsmassnahmen. Eine erste Sicherheitsmassnahme ist beispielsweise ein Abschalten des Aufzugsantriebs und ein Betätigen von Antriebsbremsen um die Aufzugskabine stillzusetzen. Dies erfolgt üblicherweise durch Unterbrechen eines Aufzug-Sicherheitskreises. Eine weitere Sicherheitsmassnahme beinhaltet die Aktivierung von Fangvorrichtungen oder von entsprechenden Sicherheitsbremsen. Diese können im Bedarfsfalle die Aufzugskabine auf den Führungsschienen oder an Bremsschienen abbremsen. Die Sicherheitsmassnahmen werden heute vermehrt durch sogenannte elektronische Begrenzer gesteuert, welche die Bewegungen der Aufzugskabine überwachen.

Aus der EP1602610 ist ein Verfahren zur sicheren Erfassung von Bewegungszuständen einer Aufzugsanlage bekannt. Es werden dabei mehrere Bewegungsgrössen an unterschiedlichen Orten erfasst, miteinander verglichen und es werden mehrstufige Bremsmassnahmen initialisiert, wenn unzulässige Abweichungen festgestellt werden.

Aus einer weiteren Veröffentlichung WO2010/107409 ist eine Überwachungseinrichtung bekannt, wobei aus einer Kombination von Geschwindigkeits- und Beschleunigungsmessung ein bereinigtes oder gefiltertes Geschwindigkeitssignal berechnet wird.

Aus JP2009/023823 ist eine ähnliche Überwachungseinrichtung bekannt, wobei aus einer Kombination von Fahrweg- und Beschleunigungsmessung ein bereinigtes Geschwindigkeitssignal berechnet wird. Hierbei berechnet ein Integrator Geschwindigkeitsänderungen zwischen Messpunkten des Fahrwegmessers. Die aus den Informationen des Fahrwegmessers ermittelten Geschwindigkeiten und vom Integrator berechnete Geschwindigkeitsänderung werden addiert und eine Resetlogik stellt den Integrator jeweils auf Null, wenn beispielsweise der Fahrwegmesser einen Messpunkt registriert.

Die Erfindung bezweckt ebenso die Bereitstellung eines alternativen Verfahrens und der entsprechenden Sicherheitseinrichtung zur Überwachung der Bewegung der Aufzugskabine, wobei eine hohe Zuverlässigkeit und Sicherheit des generierten Signals erreicht werden soll.

Die im Folgenden beschriebenen Lösungen ermöglichen eine sichere, reaktionsschnelle und zuverlässige Überwachung der Bewegung der Aufzugskabine. Sicherheitsmassnahmen können somit im Notfall schnell erfolgen.

Gemäss einem Aspekt der Erfindung erfasst die Sicherheitseinrichtung zum Überwachen der Bewegung der Aufzugskabine, vorzugsweise mittels eines ersten Bewegungssensors, eine Beschleunigung der Aufzugskabine und, vorzugsweise mittels eines zweiten Bewegungssensors, eine Fahrgeschwindigkeit oder einen Fahrweg der Aufzugskabine. Der Anwender hat verschiedene Möglichkeiten zur Erfassung der zweiten Bewegungsgrösse. Bei Verwendung eines ersten Bewegungssensors in der Form eines Tachometers verwendet er in der Regel einen Generator der beispielsweise durch ein Reibrad angetrieben ist, welches mit der Aufzugskabine den Führungsschienen entlang verfahren wird. Ein derartiges Tachometer generiert ein zur Drehgeschwindigkeit und damit zur Fahrgeschwindigkeit proportionales elektrisches Signal, welches durch einen Wandler in ein vorzugsweise digitales Signal der Fahrgeschwindigkeit der Aufzugskabine umgewandelt werden kann. Bei Verwendung eines ersten Bewegungssensors in der Form eines Inkrementalgebers oder eines anderen wegbasierten Sensorsystems, wird ein entsprechendes Signal der Fahrgeschwindigkeit der Aufzugskabine aus den erfassten Weginkrementen abgeleitet.
Weiter ermittelt die Sicherheitseinrichtung, vorzugsweise in einer Integrationsroutine, aus der vom ersten Bewegungssensor erfassten Beschleunigung der Aufzugskabine eine integrierte Fahrgeschwindigkeit, wobei die vom zweiten Bewegungssensor erfasste oder abgeleitete Fahrgeschwindigkeit als Startgrösse eines Integrationszyklus der Integrationsroutine verwendet wird. Damit werden einerseits zwei unterschiedliche Sensorarten zur Erfassung der Fahrgeschwindigkeit verwendet, was eine gute gegenseitige Verifikation des Resultats ermöglicht, und andererseits wird beispielsweise eine mögliche Drift des ersten Bewegungssensors, welcher die Beschleunigung erfasst, kompensiert.
Weiter wird nun, vorzugsweise in einem ersten Überwachungsmodul, die integrierte Fahrgeschwindigkeit mit mindestens einer vorgegebenen Grenzgeschwindigkeit verglichen und es wird bei Überschreitung der vorgegebenen Grenzgeschwindigkeit eine oder mehrere nachfolgende Sicherheitsmassnahmen ausgelöst.
Damit steht ein schnelles und sicheres Verfahren und System zur Überwachung der Bewegung der Aufzugskabine zur Verfügung. Sicher, da Bewegungsgrössen redundant durch unterschiedliche Erfassungsmethoden erfasst werden können und schnell, da mittels der erfassten Beschleunigung ein Schlupf und Weginkrement unabhängiges System zur Bereitstellung einer integrierten Fahrgeschwindigkeit vorliegt. Schlupf und Weginkremente führen, vor allem bei schnellen Bewegungsänderungen zu ungenauen und zeitlich verzögerten Werten.

In einer vorzugsweisen Lösungsvariante wird, vorzugsweise in einer ersten Vergleichsroutine, die integrierte Fahrgeschwindigkeit mit der erfassten oder abgeleiteten Fahrgeschwindigkeit verglichen und ein neuer Integrationszyklus, unter Verwendung der erfassten oder abgeleiteten Fahrgeschwindigkeit, wird gestartet, wenn eine Differenz zwischen den beiden Fahrgeschwindigkeiten einen ersten Differenzgrenzwert überschreitet oder wenn eine Dauer des aktuellen Integrationszyklus eine vorbestimmte Zeitspanne überschreitet. Dieser Vergleich erfolgt sporadisch in relativ grossen Zeitintervallen von Beispielsweise bis zu 1 Sekunde und der erste Differenzgrenzwert ist grosszügig gesetzt.
Vorzugsweise wird eine Warn- oder Sicherheitsmassnahme ausgelöst, wenn eine Differenz zwischen den beiden Fahrgeschwindigkeiten einen Warngrenzwert überschreitet, oder wenn ein zeitlicher Verlauf der Differenz zwischen den beiden Fahrgeschwindigkeiten einen Alarmwert überschreitet.

Geringe Abweichungen zwischen zwei unterschiedlichen Erfassungsarten sind üblich. So ist über eine längere Zeit oder einen längeren Fahrweg betrachtet ein Erfassungsresultat eines Tachometers oder eines Inkrementgebers zuverlässig, während schnelle Veränderungen durch eine Erfassung einer Beschleunigung zuverlässig erkannt werden können. Mit der vorliegenden Lösung kann so zum Beispiel eine Drift eines Beschleunigungssensors zuverlässig kompensiert werden und gleichzeitig können schnelle Veränderungen ebenso zuverlässig erkannt werden.

In einer vorzugsweise Lösungsvariante wird aus der erfassten oder abgeleiteten Fahrgeschwindigkeit der Aufzugskabine weiter eine zweite Beschleunigung der Aufzugskabine ableitet, und diese zweite Beschleunigung wird, vorzugsweise in einer zweiten Vergleichsroutine, mit der erfassten Beschleunigung verglichen. Bei Vorliegen einer Übereistimmung der beiden Beschleunigungen wird ein OK-Signal erzeugt, und das OK-Signal wird zur Freigabe der weiteren Integration der Integrationsroutine verwendet. Andererseits wird die Sicherheitsmassnahme ausgelöst, wenn eine Differenz zwischen diesen beiden Beschleunigungen einen definierten Beschleunigungs-Differenzgrenzwert überschreitet, bzw. wenn das OK-Signal nicht ausgegeben wird. Vorzugsweise erfolgt dieser Vergleich häufig, beispielsweise in einem Intervall von etwa 10 Millisekunden, und der Beschleunigungs-Differenzgrenzwert beim Vergleich der beiden Beschleunigungen ist eng angesetzt. Selbstverständlich werden die Differenzgrenzwerte und ebenso die anderen Grenzwerte unter Berücksichtigung der Charakteristik und Messgenauigkeit der vorhandenen Sensoren sowie der Aufzugsanlage selbst festgelegt.
Im gesamten wird mit dieser Ausführung eine Qualität und Richtigkeit der Signale und der Ableitungsroutinen verifiziert und damit die Zuverlässigkeit und Sicherheit des Überwachungssystems verbessert.

In einer vorzugsweisen Lösungsvariante werden, vorzugsweise in einer weiteren dritten Vergleichsroutine, die vom ersten Bewegungssensor erfasste Beschleunigung mit der aus der erfassten oder abgeleiteten Fahrgeschwindigkeit der Aufzugskabine abgeleiteten zweiten Beschleunigung der Aufzugskabine gegengleich zur zweiten Vergleichsroutine verglichen. Auch hierbei wird die Sicherheitsmassnahme ausgelöst, wenn eine Differenz zwischen diesen beiden Beschleunigungen den definierten Beschleunigungs-Differenzgrenzwert überschreitet. Auch dieser Vergleich erfolgt parallel zur zweiten Vergleichsroutine häufig und der Beschleunigungs-Differenzgrenzwert beim Vergleich der beiden Beschleunigungen ist ebenso eng angesetzt. Auch diese Grenzwerte sind unter Berücksichtigung der Charakteristik und Messgenauigkeit der vorhandenen Sensoren und der Aufzugsanlage selbst festgelegt, wobei vorzugsweise dieselben Grenzwerte verwendet werden, wie sie in der zweiten Vergleichsroutine verwendet sind.

Die beiden Routinen, die zweite und die dritte Vergleichsroutine verlaufen vorzugsweise gleichgetaktet. Das Resultat des Vergleiches muss demzufolge bei richtiger Funktion der Vergleichsroutinen im Wesentlichen identisch sein. Diese Vergleichswerte können somit in einer ergänzenden Beurteilung auf Gleichheit geprüft werden, wobei natürlich bei fehlender Gleichheit entsprechende Sicherheitsmassnahmen oder Serviceanforderungen getroffen werden können.

Vorzugsweise beinhaltet die Sicherheitseinrichtung zum Überwachen der Bewegung der Aufzugskabine zumindest eine erste Prozessoreinheit und eine zweite Prozessoreinheit und die Sensoren, Vergleichsroutinen, Überwachungsmodule und Rechenroutinen sind auf die beiden Prozessoreinheiten aufgeteilt. So sind beispielsweise der erste Bewegungssensor zur Erfassung der Beschleunigung, die Integrationsroutine, das erste Überwachungsmodul sowie allenfalls die erste und die zweite Vergleichsroutine als Bestandteil der ersten Prozessoreinheit, bzw. als Funktionsgruppen zur ersten Prozessoreinheit ausgeführt. Der zweite Bewegungssensor zur Erfassung der Fahrgeschwindigkeit oder des Fahrwegs der Aufzugskabine, allfällige Rechenroutinen und Differntiatoren sowie allenfalls die dritte Vergleichsroutine sind als Bestandteil der zweiten Prozessoreinheit, bzw. als Funktionsgruppen zur zweiten Prozessoreinheit ausgeführt. Mit einer Architektur von getrennten Prozessoreinheiten zur Bearbeitung und unabhängigen parallelen Auswertung der erfassten Signale der mindestens zwei Bewegungssensoren ist eine hohe Sicherheit der Sicherheitseinrichtung erreichbar, da die Prozessoreinheiten unabhängig voneinander allfällige Sicherheitsmassnahmen initialisieren können.

Vorzugsweise beinhaltet die Sicherheitseinrichtung ein zweites Überwachungsmodul, welches die vom zweiten Bewegungssensor erfasste oder von diesem abgeleitete Fahrgeschwindigkeit mit mindestens einer vorgegebenen Grenzgeschwindigkeit vergleicht und welches bei Überschreitung der vorgegebenen Grenzgeschwindigkeit die Sicherheitsmassnahme auslöst. Vorzugsweise ist dieses zweite Überwachungsmodul der zweiten Prozessoreinheit zugeordnet. Somit wird die Fahrgeschwindigkeit der Aufzugskabine zweifach separat überwacht, wodurch die Gesamtsicherheit erhöht wird.

Vorzugsweise beinhaltet die Sicherheitseinrichtung eine vierte Vergleichsroutine die die vom zweiten Bewegungssensor erfasste oder abgeleitete Fahrgeschwindigkeit mit der von der Integrationsroutine integrierten Fahrgeschwindigkeit vergleicht und die eine Warn- oder Sicherheitsmassnahme auslöst, wenn die Differenz zwischen den beiden Fahrgeschwindigkeiten den Warngrenzwert überschreitet oder wenn ein zeitlicher Verlauf der Differenz zwischen den beiden Fahrgeschwindigkeiten einen Alarmwert überschreitet. Vorzugsweise ist diese vierte Vergleichsroutine der zweiten Prozessoreinheit zugeordnet. Somit wird weiter die Qualität der Sicherheitseinrichtung redundant in beiden Prozessoreinheiten überwacht und die Gesamtsicherheit wird entsprechend verbessert. Analog zur ersten Vergleichsroutine erfolgt auch der Vergleich der vierten Vergleichsroutine sporadisch in relativ grossen Zeitintervallen und der zugehörige erste Differenzgrenzwert ist grosszügig gesetzt. Die vierte Vergleichsroutine ist somit das zur ersten Vergleichsroutine redundante Vergleichselement.

Vorzugsweise beinhaltet die Sicherheitseinrichtung ein drittes Überwachungsmodul, welches die vom ersten Bewegungssensor erfasste Beschleunigung der Aufzugskabine mit mindestens einer vorgegebenen Grenzbeschleunigung vergleicht und welches bei Überschreitung einer vorgegebenen Grenzbeschleunigung eine Sicherheitsmassnahme auslöst. Vorzugsweise ist dieses dritte Überwachungsmodul der ersten Prozessoreinheit zugeordnet. Mit diesem dritten Überwachungsmodul wird direkt und schnell ein gravierender Fehler im Aufzug erkannt, wenn beispielsweise bei einem Versagen von Tragmitteln plötzlich eine hohe Beschleunigung entsteht. Somit kann bei einem derartigen Fehler eine Bremsmassnahme schnell erfolgen.

Vorzugsweise kann die Sicherheitseinrichtung mindestens zwei unterschiedliche Sicherheitsmassnahmen auslösen, wobei eine erste Sicherheitsmassnahme ein Unterbrechen eines Aufzugs-Sicherheitskreises bewirkt, und eine zweite Sicherheitsmassnahme ein Betätigen einer Fangvorrichtung der Aufzugskabine bewirkt. Der Aufzugs-Sicherheitskreis ist in der Aufzugsanlage eine zentrale Funktionskette, welche zum Verfahren der Aufzugskabine intakt, bzw. geschlossen sein muss. So wird der Aufzugs-Sicherheitskreis beispielsweise geöffnet, wenn eine Schachttüre geöffnet wird. Ein Unterbruch im Aufzugs-Sicherheitskreises bewirkt, dass ein Antrieb der Aufzugsanlage stillgesetzt wird und entsprechende Antriebsbremsen zur Wirkung gebracht werden. Sofern nun die Sicherheitseinrichtung eine unübliche Abweichung im Bewegungsablauf feststellt oder eine Funktion der Sicherheitseinrichtung nicht mehr gewährleistet ist, wird im Regelfall als erste Sicherheitsmassnahme dieser Aufzugs-Sicherheitskreises unterbrochen und damit die Aufzugsanlage stillgesetzt. Nimmt die Abweichung im Bewegungsablauf trotz der ersten Sicherheitsmassnahme weiter zu oder sind die Abweichungen sehr gross, werden in der Regel als zweite Sicherheitsmassnahme Fangbremsen betätigt, welche die Aufzugskabine unmittelbar an Führungsschienen festklemmen und so die Aufzugskabine sicher bremsen und halten. Die Fangbremsen sind in der Regel von einer Bremssteuerung kontrolliert. Die Betätigung der Fangbremsen erfolgt in diesen Fällen über diese Bremssteuerung.

Vorzugsweise ist der zweite Bewegungssensor der Sicherheitseinrichtung im Bereich einer Aufzugskabinenrolle, vorzugsweise im Bereich einer auf der Kabine angeordneten Tragmittelumlenkrolle, angeordnet und er wird von dieser angetrieben. Die Fahrgeschwindigkeit oder der Fahrweg der Aufzugskabine kann so aus einer Drehbewegung der Aufzugskabinenrolle oder der Tragmittelumlenkrolle genau erfasst werden. Aufzugskabinenrollen oder auch Tragmittelumlenkrollen sind in die Tragstruktur der Aufzugskabine eingebunden. Die Last auf die Rolle ist dabei so gross, dass ein Schlupf verkleinert wird und zugleich führt ein Fehler in der Tragstruktur mit hoher Wahrscheinlichkeit auch zu einer Beeinflussung der durch den zweiten Bewegungssensor erfassten Bewegungsgrösse. Dies wird durch die vorgenannte Vergleichsroutine zuverlässig erkannt und erforderliche Sicherheitsmassnahmen können so initialisiert werden.

Vorzugsweise umfasst die Sicherheitseinrichtung eine erste Sicherheitseinrichtung und eine zweite Sicherheitseinrichtung, wobei beide Sicherheitseinrichtungen wie in den vorgenannten Ausführungen erklärt ausgeführt sind. Die erste Sicherheitseinrichtung ist dabei vorzugsweise im Bereiche einer ersten Tragmittelumlenkrolle der Aufzugskabine angeordnet und die zweite Sicherheitseinrichtung ist im Bereiche einer zweiten Tragmittelumlenkrolle der Aufzugskabine angeordnet. Damit ist die Gesamtsicherheit stark erhöht, da im gesamten je zwei Bewegungssensoren zur Erfassung der Beschleunigung der Aufzugskabine und zur Erfassung der Fahrgeschwindigkeit oder des Fahrwegs verwendet und zueinander verglichen und ausgewertet werden.

Im Folgenden sind beispielhafte Ausführungen anhand von Beispielen und schematischen Ausführungen erläutert. Es zeigen:
- Fig. 1: eine schematische Ansicht einer Aufzugsanlage in der Seitenansicht,
- Fig. 2: eine schematische Ansicht der Aufzugsanlage im Querschnitt,
- Fig. 3: ein erstes Ausführungsbeispiel einer Sicherheitseinrichtung
- Fig. 4: ein zweites Ausführungsbeispiel einer erweiterten Sicherheitseinrichtung
- Fig. 5: ein drittes Ausführungsbeispiel einer erweiterten Sicherheitseinrichtung

In den Figuren sind für gleichwirkende Teile über alle Figuren hinweg dieselben Bezugszeichen verwendet.

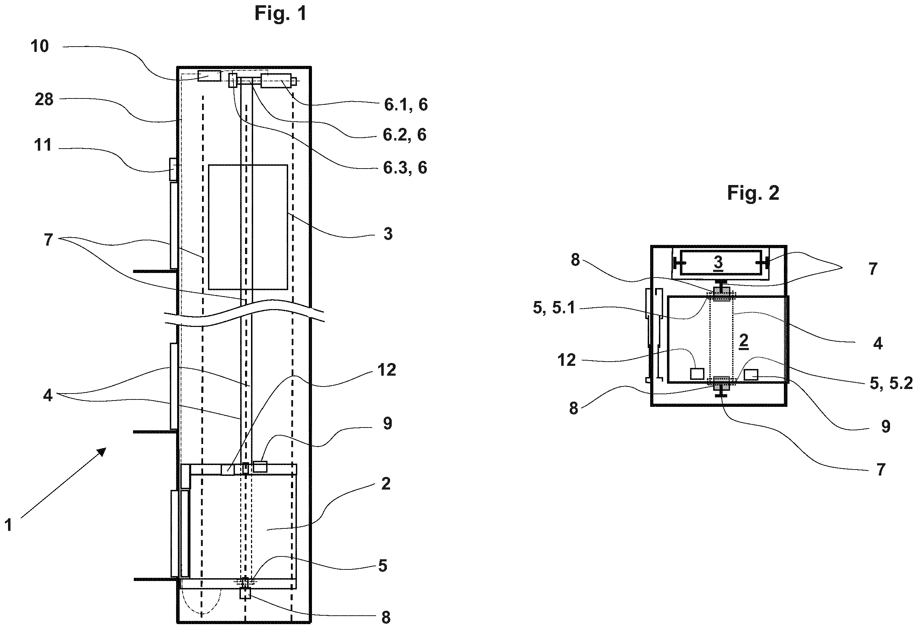

Eine Aufzugsanlage 1 ist, wie in Fig. 1 ersichtlich in einem Gebäude ein- oder angebaut und sie dient dem Transport von Personen oder Gütern innerhalb des Gebäudes. Die Aufzugsanlage beinhaltet eine Aufzugskabine 2, welche sich entlang von Führungsschienen 7 auf- und abwärts bewegen kann. Ein Antrieb 6 dient zum Antreiben und Halten der Aufzugskabine 2. Der Antrieb 6 ist beispielsweise im oberen Bereich des Gebäudes angeordnet und die Kabine 2 hängt mit Tragmitteln 4, beispielsweise Tragseile oder Tragriemen, am Antrieb 6, bzw. an Treibscheiben 6.2 des Antriebs 6. Die Tragmittel 4 sind über die Treibscheiben 6.2 weiter zu einem Gegengewicht 3 geführt. Ein Antriebsmotor 6.1 des Antriebs 6 treibt die Treibscheiben 6.2 und damit die Tragmittel 4 und somit die Aufzugskabine 2 und das Gegengewicht 3. Eine Antriebsbremse 6.3 bremst im Bedarfsfall die Treibscheiben 6.2 oder hält sie in einer Ruhelage. Der Antrieb 6 kann selbstverständlich auch an einem anderen Ort im Gebäude, oder im Bereich der Kabine 2 oder des Gegengewichts 3 angeordnet sein.
Im vorliegenden Beispiel sind die Tragmittel 4 über Tragmittelumlenkrollen 5 der Aufzugskabine 2 geführt. Die Aufzugskabine 2 und natürlich entsprechend auch das Gegengewicht 3 ist 2:1 aufgehängt und getrieben. An oder in mindestens einer der Tragmittelumlenkrollen 5 ist ein Bewegungssensor 14 zur Erfassung einer Fahrgeschwindigkeit oder eines Fahrwegs der Aufzugskabine angeordnet. Die Signale des Bewegungssensors 14 werden an eine Sicherheitseinrichtung 12 weitergegeben.

Die Aufzugsanlage 1 wird von einer Aufzugssteuerung 11 gesteuert. Die Aufzugssteuerung 11 nimmt Benutzeranfragen entgegen, optimiert den Betriebsablauf der Aufzugsanlage und steuert, in der Regel über eine Antriebssteuerung 10 den Antrieb 6. Die Aufzugssteuerung 11 oder die Antriebssteuerung 10 überwacht zudem den Sicherheitszustand der Aufzugsanlage und unterbricht den Fahrbetrieb wenn ein unsicherer Betriebszustand eintritt. Diese Überwachung wird in der Regel mit Verwendung eines Aufzugsicherheitskreises 28 durchgeführt, in dem alle sicherheitsrelevanten Funktionen eingebunden sind. In die derartige Überwachung, bzw. in diesen Aufzugsicherheitskreis, sind beispielsweise auch Schachttürkontakte einbezogen, welche eine korrekte Schliessung der Schachttüren überwachen und es werden beispielsweise auch Grenzpositionen der Fahrkörper 2, 3 im Aufzugsschacht überwacht. Eine Unterbrechung des Aufzugsicherheitskreises 28 bewirkt ein Abschalten des Antriebmotors 6.1 und ein Betätigen der Antriebsbremse 6.3 womit die Aufzugsanlage 1 in der Regel, das heisst bei richtiger Funktion des Trag- und Treibsystems, stillgesetzt wird.

Die Aufzugskabine 2 und im Bedarfsfalle auch das Gegengewicht 3 sind weiter mit einem Bremssystem ausgerüstet, welches geeignet ist um die Aufzugskabine 2, bzw. das Gegengewicht 3, bei einer unerwarteten Bewegung oder bei Übergeschwindigkeit, auch bei einem Versagen des Trag- und Treibsystems, zu sichern und/oder zu verzögern. Das Bremssystem umfasst im Beispiel zwei baugleiche Sicherheitsbremsen, bzw. Fangvorrichtungen 8 welche beidseitig der Aufzugskabine 2, bzw. des Gegengewichts 3 an denselben angebaut sind. Die Fangvorrichtungen 8 sind im Beispiel unterhalb der Aufzugskabine 2 angeordnet und sie sind elektrisch über eine Bremssteuerung 9 angesteuert. Diese Brems-Steuerung 9 ist zu der Sicherheitseinrichtung 12 der Aufzugsanlage verbunden, welche die Bewegung der Aufzugskabine 2, oder des Gegengewichts 3 überwacht und im Bedarfsfall die Betätigung der Fangvorrichtungen 8 veranlasst oder den Aufzugs-Sicherheitskreis 28 unterbricht. Die Brems-Steuerung 9 und die Sicherheitseinrichtung 12 können getrennte Bauteile sein, sie können natürlich auch in einer Funktionsgruppe zusammengebaut oder sogar in eine Aufzugs- oder Antriebssteuerung 11, 10 integriert sein. Ein mechanischer Geschwindigkeitsbegrenzer, wie er üblicherweise verwendet ist, kann entfallen, da die Sicherheitseinrichtung 12 dessen Aufgabe übernimmt. Bei entsprechender Auslegung der Fangvorrichtungen 8, beispielsweise durch redundante Bremskreise, entsprechende Steuer-Algorithmen und Rückstellfunktionen kann allenfalls die Antriebsbremse 6.3 entfallen und der Aufzugs-Sicherheitskreis 28 kann direkt auf die Bremssteuerung 9 einwirken.

Fig. 2 zeigt die Aufzugsanlage von Fig. 1 in einer schematischen Draufsicht. Das Bremssystem beinhaltet die zwei Fangvorrichtungen 8. Die zwei Fangvorrichtungen 8 sind elektrisch oder mechanisch gekoppelt, so dass die beiden Fangvorrichtungen 8 miteinander betätigt werden. Damit wird ein unbeabsichtigtes einseitiges Bremsen oder Fangen vermieden. Die beiden Fangvorrichtungen 8 sind vorzugsweise baugleich oder spiegelsymmetrisch ausgeführt und sie wirken auf die zu beiden Seiten der Kabine 2 angeordneten Führungsschienen 7 ein.

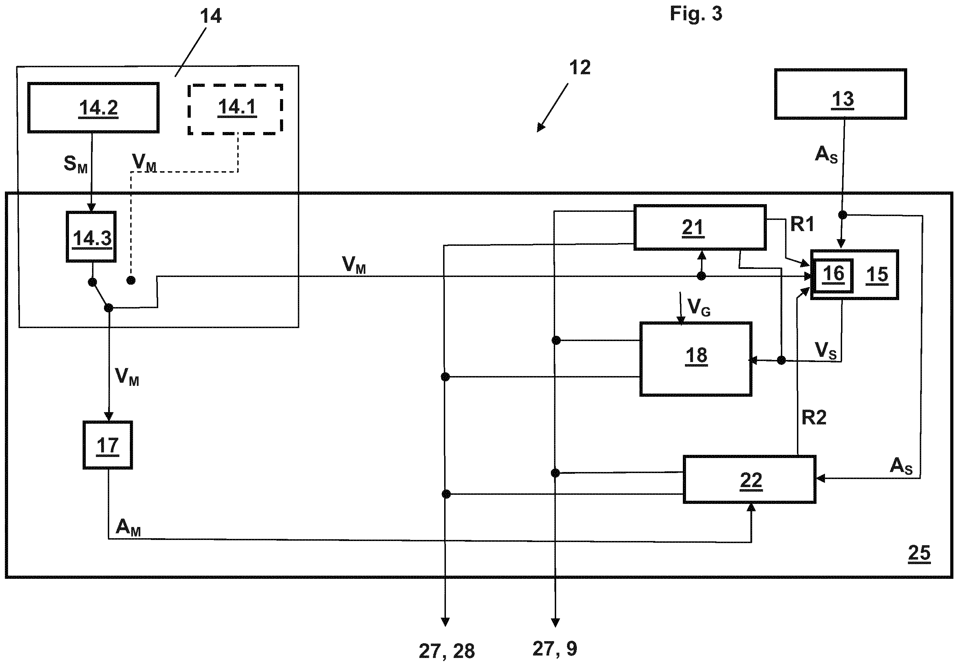

Die Sicherheitseinrichtung 12 , welche die Bewegung der Aufzugskabine überwacht beinhaltet in einem ersten Ausführungsbeispiel, wie in Figur 3 dargestellt einen ersten Bewegungssensor 13 zur Erfassung einer Beschleunigung AS der Aufzugskabine 2. Dieser erste Bewegungssensor 13 ist bei der Aufzugskabine 2 angeordnet, bzw. an dieser befestigt, so dass er zumindest die Beschleunigungen der Aufzugskabine in vertikaler Richtung erfassen kann. Aus dieser Beschleunigung berechnet eine Integrationsroutine 15 eine integrierte Fahrgeschwindigkeit VS, wobei natürlich die Beschleunigung um den Betrag der Erdbeschleunigung korrigiert wird.
Weiter beinhaltet die Sicherheitseinrichtung 12 einen zweiten Bewegungssensor 14 der mit Bezug auf die Figur 1 an einer der Tragmittelumlenkrollen 5 angebaut ist und der, in einer Ausführung, mittels eines Inkrementzählers 14.2 Winkelbewegungen der Tragmittelumlenkrolle 5 erfasst. Unter Kenntnis eines Rollendurchmessers der Tragmittelumlenkrolle 5 wird daraus ein Fahrweg SM erfasst und aus diesem Fahrweg SM wird mittels eines Weg-Differentialrechners 14.3 eine Fahrgeschwindigkeit VM abgeleitet. Alternativ kann anstelle des Inkrementzählers 14.2 und des Weg-Differentialrechners 14.3 ein Tachometer 14.1 verwendet werden, der direkt die Fahrgeschwindigkeit VM erfasst, wie es in Figur 3 gestrichelt dargestellt ist. Weiter berechnet eine Differentialroutine 17 aus der vom zweiten Bewegungssensor 14 erfassten oder abgeleiteten Fahrgeschwindigkeit VM eine abgeleitete Beschleunigung AM.

Die Signale von Beschleunigungssensoren, wie sie zum Erfassen von Beschleunigungen der Aufzugskabine 2 verwendet werden, weisen systembedingte geringe Ungenauigkeiten auf. Dies führt über die Integration zu einer Summierung dieser Ungenauigkeiten, was über längere Zeit zu einer Verfälschung des Resultats führt. Um diese Ungenauigkeiten oder Drift zu kompensieren wird in einem zeitlichen Intervall, wenn bestimmte Fahrereignisse eintreffen oder wenn eine Differenz dV zwischen der vom zweiten Bewegungssensor erfassten Fahrgeschwindigkeit VM und der vom ersten Bewegungssensor integrierten Fahrgeschwindigkeit VS einen bestimmten Betrag überschreitet ein neuer Integrationszyklus, unter Verwendung der vom zweiten Bewegungssensor erfassten Fahrgeschwindigkeit VM als Startgrösse, gestartet. Dazu ist der Integrationsroutine 15 eine Resetlogik 16 beigefügt. Die Resetlogik 16 steuert den Integrationsverlauf der Integrationsroutine 15 und speist die vom zweiten Bewegungssensor 14 erfasste Fahrgeschwindigkeit VM jeweils als Startgrösse eines Integrationszyklus ein. Im Ausführungsbeispiel von Figur 3 vergleicht dazu eine erste Vergleichsroutine 21 die integrierte Fahrgeschwindigkeit VS des ersten Bewegungssensors 13 mit der erfassten Fahrgeschwindigkeit VM und generiert ein Warnsignal R1 an die Resetlogik 16, wenn eine Differenz dV zwischen den zwei Fahrgeschwindigkeiten VS, VM einen vorbestimmten Wert von Beispielsweise etwa 5% einer Nominalgeschwindigkeit übersteigt. Sobald dieser Warnlevel R1 an der Resetlogik 16 ansteht, wird ein neuer Integrationszyklus gestartet, wobei dann die vom zweiten Bewegungssensor erfasste Fahrgeschwindigkeit VM als Startgrösse des neuen Integrationszyklus gesetzt wird. Damit wird eine Drift im Grundsatz kontinuierlich ausgeglichen.
Die Vergleichsroutine 21 arbeitet dabei in langen Zeitintervallen von beispielsweise etwa 500 Millisekunden. Stellt nun die Vergleichsroutine 21 fest, dass die Differenz dV innerhalb dieses Zeitintervalls gross wird, beispielsweise mehr als 10% der Nominalgeschwindigkeit, wird eine Sicherheitsmassnahme 27 ausgelöst. In einer ersten Stufe wird dadurch der Aufzugs-Sicherheitskreis 28 unterbrochen und damit die Aufzugsanlage stillgesetzt. Ist die Differenz dV innerhalb dieses Zeitintervalls noch grösser, beispielsweise mehr als 15% der Nominalgeschwindigkeit, wird direkt eine Bremssteuerung 9 zur Aktivierung der Fangvorrichtungen angesteuert.

In Ergänzung zur ersten Vergleichsroutine 21 überprüft eine zweite Vergleichsroutine 22 eine richtige Funktion des ersten und des zweiten Bewegungssensors 13, 14, indem sie die vom zweiten Bewegungssensor 14 abgeleitete Beschleunigung AM mit der vom ersten Bewegungssensor 13 erfassten und natürlich erdbeschleunigungbereinigter Beschleunigung AS vergleicht. Diese zweite Vergleichsroutine 22 arbeitet im Gegensatz zur ersten Vergleichsroutine 21 mit hohen Taktfrequenzen. Ein Arbeitszeitintervall der zweiten Vergleichsroutine 22 beträgt beispielsweise etwa 10 Millisekunden. Solange die zweite Vergleichsroutine in etwa eine Übereinstimmung der beiden Beschleunigungen AM, AS feststellt, wird ein OK-Signal R2 an die Resetlogik 16 ausgegeben. Dies bewirkt, dass die Integrationsroutine 15 weitergeführt wird. Weichen die beiden Beschleunigungen AM, AS deutlich voneinander ab wird das OK-Signal gestoppt, worauf die Resetlogik 16 den jeweils grösseren der zwei Fahrgeschwindigkeiten VS, VM für einen allfällig neuen Integrationszyklus verwendet. Gleichzeitig wird die Sicherheitsmassnahme 27 selektiv initialisiert, indem abhängig von der Grösse eines Unterschied zwischen den beiden Beschleunigungen AM, AS lediglich der Aufzugs-Sicherheitskreis 28 unterbrochen wird oder, allenfalls Zeitverzögert, die Bremssteuerung 9 angesteuert wird. Die in den Beispielen angegebenen Werte sind lediglich beispielhaft. Abhängig von verwendeten Sensoren, Fahrgeschwindigkeit, etc. werden die Zeitwerte, Differenzwerte und andere Werte festgelegt.

Weiter beinhaltet die Sicherheitseinrichtung nach Figur 3 ein erstes Überwachungsmodul 18, welches die integrierte Fahrgeschwindigkeit AS mit einer zulässigen Grenzgeschwindigkeit VG vergleicht und die Sicherheitsmassnahme 27 auslöst, wenn die zulässige Grenzgeschwindigkeit VG überschritten wird. Üblicherweise wird als erste Sicherheitsmassnahme 27 der Aufzugs-Sicherheitskreis 28 unterbrochen wenn die sogenannte Nominalgeschwindigkeit der Aufzugsanlage um etwa 10% überschritten wird, bzw. es wird die Fangvorrichtung 8 betätigt, wenn die Nominalgeschwindigkeit um mehr als 15% überschritten wird.
Somit wird mittels Vergleich der Beschleunigungen AM, AS die Funktion der beiden Bewegungssensoren geprüft und überwacht und es wird, mittels sporadischem Abgleich der Fahrgeschwindigkeiten VM, VS, eine Drift der integrierten Fahrgeschwindigkeit VS kompensiert sowie eine Funktion von Berechnungsroutinen geprüft. Damit ist die Fahrgeschwindigkeit der Aufzugskabine zuverlässig überwachbar.
Im Beispiel sind die Berechnungsroutinen 15, 17, 14.3, die Vergleichsroutinen 21, 22 und das Überwachungsmodul 18 auf einer Platine oder auf einer Prozessoreinheit 25 angeordnet. Weiter kann auch der erste Bewegungssensor 13 ein Bestandteil dieser Prozessoreinheit 25 sein und die gesamte Sicherheitseinrichtung 12 kann im Bereich Tragmittelumlenkrollen 5 (siehe Figur 1 und 2) angeordnet sein. Selbstverständlich können die Anordnungen anders gewählt werden. So kann Beispielsweise der zweite Bewegungssensor 14 zusammen mit der Differentialroutine 17 eine Prozessoreinheit bilden und die übrigen Bauteile wie Integrationsroutine 15, die Vergleichsroutinen 21, 22 und das Überwachungsmodul 18 können in einer anderen Prozessoreinheit zusammengefasst sein.

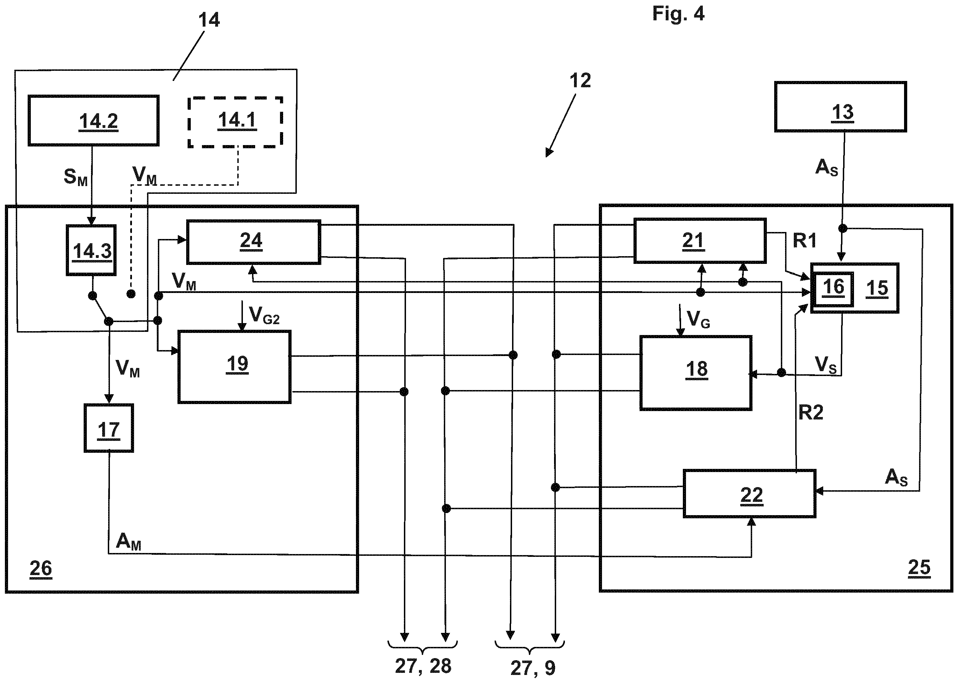

In einer weiteren Ausführung, wie sie in Figur 4 dargestellt ist, beinhaltet die Sicherheitseinrichtung 12 in Ergänzung der vorgängig erläuterten Sicherheitseinrichtung ein zweites Überwachungsmodul 19 welches die vom zweiten Bewegungssensor 14 erfasste oder abgeleitete Fahrgeschwindigkeit VM mit einer zulässigen Grenzgeschwindigkeit VG2 vergleicht und analog zum ersten Überwachungsmodul 18 die Sicherheitsmassnahme 27 auslöst, wenn die zulässige Grenzgeschwindigkeit überschritten wird. In der Regel ist die zulässige Grenzgeschwindigkeit VG2 identisch zur Grenzgeschwindigkeit VG gesetzt. Weiter beinhaltet die Sicherheitseinrichtung 12 eine vierte Vergleichsroutine 24, welche in teilweiser Analogie zur ersten Vergleichsroutine 21 die vom zweiten Bewegungssensor 14 erfasste oder abgeleitete Fahrgeschwindigkeit VM mit der integrierten Fahrgeschwindigkeit VS des ersten Bewegungssensors 13 vergleicht. Diese vierte Vergleichsroutine 24 löst ebenfalls, wie die erste Vergleichsroutine 21, eine Sicherheitsmassnahme 27 aus, wenn eine Differenz innerhalb eines gesetzten Zeitintervalls gross wird.

In diesem Ausführungsbeispiel ist die Integrationsroutine 15 mit zugehöriger Resetlogik 16, die erste und zweite Vergleichsroutine 21, 22 sowie das Überwachungsmodul 18 auf einer ersten Prozessoreinheit 25 angeordnet. Diese erste Prozessoreinheit 25 ist dem ersten Bewegungssensor 13 zugeordnet, bzw. der erste Bewegungssensor 13 ist in die erste Prozessoreinheit 25 integriert. Die übrigen Baugruppen wie die Diffentialroutine 17, das Überwachungsmodul 19 und die vierte Vergleichsroutine 24 sind auf einer zweiten Prozessoreinheit 26 in Verbindung zum Wegsensor 14.2 und dem Weg-Diffentiator 14, 3 oder dem Geschwindigkeitstachometer 14.1 angeordnet. Die Sicherheit dieser Sicherheitseinrichtung mit zwei Prozessoreinheiten 25, 26 ist besonders zuverlässig, da wichtige Funktionen redundant verarbeitet werden und die zwei Prozessoreinheiten 25, 26 unabhängig voneinander Sicherheitsmassnahmen 27 initialisieren können.

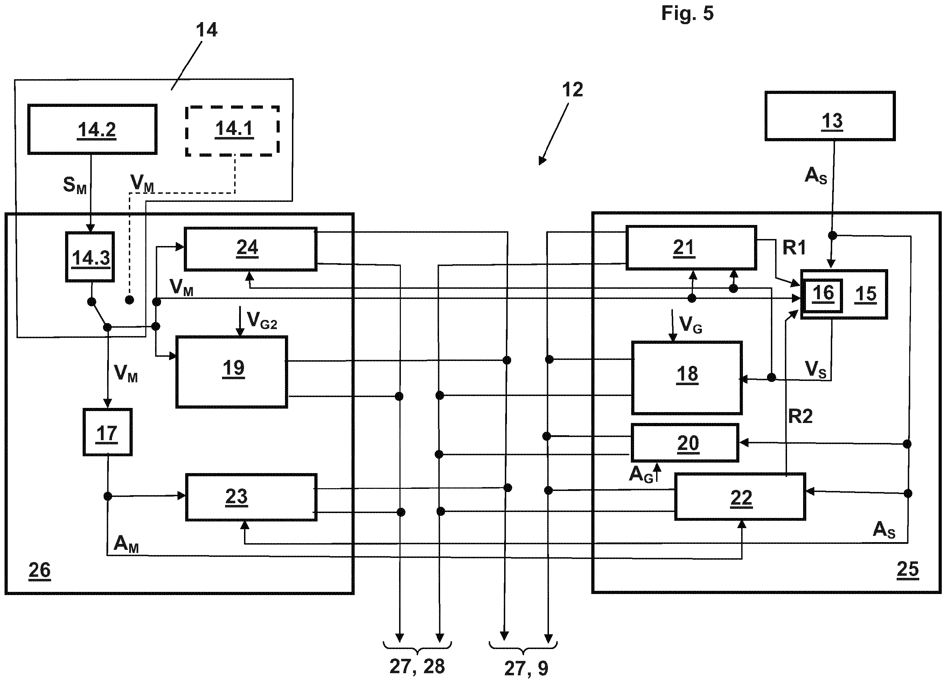

Eine weitere Ausführung, wie sie in Figur 5 dargestellt ist beinhaltet, in Ergänzung zu den vorgängigen Ausführungen, weiter ein drittes Überwachungsmodul 20, welches bei der ersten Prozessoreinheit 25 angeordnet ist und welches die vom ersten Bewegungssensor 13 erfasste Beschleunigung AS der Aufzugskabine mit mindestens einer vorgegebenen Grenzbeschleunigung AG vergleicht und welches bei Überschreitung der vorgegebenen Grenzbeschleunigung AG eine Sicherheitsmassnahme 27 auslöst. Dieses dritte Überwachungsmodul 20 ist primär vorgesehen um einen allfälligen Freifall oder Absturz einer Aufzugskabine schnell zu erfassen.
Weiter ist in dieser Ausführung eine dritte Vergleichsroutine 23 vorgesehen, welche bei der zweiten Prozessoreinheit 26 angeordnet ist und welche in Analogie zur zweiten Vergleichsroutine 22 eine richtige Funktion des ersten und des zweiten Bewegungssensors 13, 14 überprüft, indem sie die vom ersten Bewegungssensor 13 erfasste und natürlich erdbeschleunigungbereinigte Beschleunigung AS mit der vom zweiten Bewegungssensor 14 abgeleiteten Beschleunigung AM vergleicht und allfällige Sicherheitsmassnahmen auslöst, wenn der Vergleich zu grosse Abweichungen ergibt.

Die dargestellten Ausführungen können vom Fachmann variiert werden. Abhängig vom geforderten Sicherheitslevel können redundante Vergleichsroutinen 23, 24 oder das redundante Überwachungsmodul 19 weggelassen werden. Allenfalls kann die gesamte Sicherheitseinrichtung 12 in einer der Ausführungen oder einer Variation davon dupliziert werden, so dass eine Sicherheitseinrichtung bei einer ersten Tragmittelumlenkrolle 5.1 und eine zweite Sicherheitseinrichtung bei einer zweiten Tragmittelumlenkrolle 5.2 angeordnet ist. Durch diese redundante Anordnung wird eine Sicherheit der Gesamtanlage verbessert. Auch können natürlich anstelle der in den Ausführungsbeispielen erwähnten Inkrementalsensoren oder Tachogeneratoren auch Absolutpositionssysteme oder andere Wegmesssysteme verwendet werden. In den Ausführungen sind das Verfahren und die Sicherheitseinrichtung in der Anwendung zur Überwachung der Bewegungen der Aufzugskabine dargestellt und erläutert. In gleicher Art und Weise kann das Verfahren, bzw. die Einrichtung natürlich auch am Gegengewicht verwendet werden.

## Patentansprüche

1. Verfahren zum Überwachen der Bewegung der Aufzugskabine, beinhaltend die Schritte:
- Erfassen einer Beschleunigung (AS) der Aufzugskabine,
- Erfassen einer Fahrgeschwindigkeit (VM) oder eines Fahrwegs (SM) der Aufzugskabine, wobei im Bedarfsfall, wenn der Fahrweg (SM) der Aufzugskabine erfasst wird, aus dem erfassten Fahrweg (SM) der Aufzugskabine die Fahrgeschwindigkeit (VM) abgeleitet wird,
- Ermitteln einer integrierten Fahrgeschwindigkeit (VS) durch Integration der erfassten Beschleunigung (AS) der Aufzugskabine wobei die erfasste oder abgeleitete Fahrgeschwindigkeit (VM) als Startgrösse eines Integrationszyklus verwendet wird, und
- Vergleichen der integrierten Fahrgeschwindigkeit (VS) mit mindestens einer vorgegebenen Grenzgeschwindigkeit (VG), und auslösen einer Sicherheitsmassnahme (27) wenn eine Überschreitung der vorgegebenen Grenzgeschwindigkeit (VG) festgestellt wird.

2. Verfahren nach Anspruch 1, wobei die integrierte Fahrgeschwindigkeit (VS) mit der erfassten oder abgeleiteten Fahrgeschwindigkeit (VM) verglichen wird und ein neuer Integrationszyklus gestartet wird, wenn eine Differenz (dV) zwischen der integrierten Fahrgeschwindigkeit (VS) und der erfassten oder abgeleiteten Fahrgeschwindigkeit (VM) einen ersten Differenzgrenzwert überschreitet oder wenn eine Dauer des aktuellen Integrationszyklus eine vorbestimmte Zeitspanne überschreitet.

3. Verfahren nach Anspruch 1 oder 2, wobei die integrierte Fahrgeschwindigkeit (VS) mit der erfassten oder abgeleiteten Fahrgeschwindigkeit (VM) verglichen wird und eine Warn- oder Sicherheitsmassnahme (27) ausgelöst wird,
- wenn eine Differenz zwischen der integrierten Fahrgeschwindigkeit (VS) und der erfassten oder abgeleiteten Fahrgeschwindigkeit (VM) einen Warngrenzwert überschreitet, und/oder
- wenn ein zeitlicher Verlauf der Differenz zwischen der integrierten Fahrgeschwindigkeit (VS) und der erfassten oder abgeleiteten Fahrgeschwindigkeit (VM) einen Alarmwert überschreitet.

4. Verfahren nach einem der Ansprüche 1 bis 3, wobei
- aus der erfassten oder abgeleiteten Fahrgeschwindigkeit (VM) der Aufzugskabine eine zweite Beschleunigung (AM) der Aufzugskabine abgeleitet wird, und
- die erfasste Beschleunigung (AS) mit der aus der erfassten oder abgeleiteten Fahrgeschwindigkeit (VM) der Aufzugskabine abgeleiteten zweiten Beschleunigung (AM) verglichen wird, und bei Vorliegen einer Übereistimmung der beiden Beschleunigungen (AS, AM) ein OK-Signal (R2) erzeugt wird, und dieses OK-Signal zur Freigabe der weiteren Integration verwendet wird, oder die Sicherheitsmassnahme (27) ausgelöst wird, wenn eine Differenz (dA) zwischen der erfassten Beschleunigung (AS) und der zweiten Beschleunigung (AM) einen Beschleunigungs-Differenzgrenzwert überschreitet, bzw. wenn das OK-Signal nicht ausgegeben wird.

5. Sicherheitseinrichtung (12) einer Aufzugsanlage (1) zum Überwachen der Bewegung der Aufzugskabine (2) nach einem der Verfahren von Anspruch 1 bis 4, beinhaltend:
- einen ersten Bewegungssensor (13) zur Erfassung der Beschleunigung (AS) der Aufzugskabine (2),
- einen zweiten Bewegungssensor (14, 14.1, 14.2), zur Erfassung der Fahrgeschwindigkeit (VM) oder des Fahrwegs (SM) der Aufzugskabine (2), wobei im Bedarfsfall, bei Erfassung des Fahrwegs (SM) der Aufzugskabine (2), aus dem vom zweiten Bewegungssensor (14.2) erfassten Fahrweg (SM) der Aufzugskabine (2) die Fahrgeschwindigkeit (VM) abgeleitet wird,
- eine Integrationsroutine (15), welche aus der vom ersten Bewegungssensor (13) erfassten Beschleunigung (AS) der Aufzugskabine (2) die integrierte Fahrgeschwindigkeit (VS) ermittelt, wobei die Integrationsroutine (15) die vom zweiten Bewegungssensor (14) erfasste oder abgeleitete Fahrgeschwindigkeit (VM) als Startgrösse eines Integrationszyklus verwendet,
- und ein erstes Überwachungsmodul (18), welches die integrierte Fahrgeschwindigkeit (VS) mit mindestens einer vorgegebenen Grenzgeschwindigkeit (VG) vergleicht und welches bei Überschreitung der vorgegebenen Grenzgeschwindigkeit (VG) die Sicherheitsmassnahme (27) auslöst.

6. Sicherheitseinrichtung (12) gemäss Anspruch 5, wobei eine erste Vergleichsroutine (21) der Sicherheitseinrichtung (12) die von der Integrationsroutine (15) integrierte Fahrgeschwindigkeit (VS) mit der vom zweiten Bewegungssensor (14) erfassten oder abgeleiteten Fahrgeschwindigkeit (VM) vergleicht und einen neuen Integrationszyklus startet, wenn die Differenz zwischen den beiden Fahrgeschwindigkeiten (VM, VS) den ersten Differenzgrenzwert überschreitet oder wenn die Dauer des aktuellen Integrationszyklus die vorbestimmte Zeitspanne überschreitet.

7. Sicherheitseinrichtung (12) gemäss Anspruch 6, wobei die erste Vergleichsroutine (21) der Sicherheitseinrichtung (12) die von der ersten Integrationsroutine (15) integrierte Fahrgeschwindigkeit (VS) mit der vom zweiten Bewegungssensor (14) erfassten oder abgeleiteten Fahrgeschwindigkeit (VM) vergleicht und die Warn- oder Sicherheitsmassnahme (27) auslöst,
- wenn die Differenz (dV) zwischen den beiden Fahrgeschwindigkeiten (VM, VS) den Warngrenzwert überschreitet, oder
- wenn der zeitlicher Verlauf der Differenz zwischen den beiden Fahrgeschwindigkeiten (VM, VS) den Alarmwert überschreitet.

8. Sicherheitseinrichtung (12) gemäss einem der Ansprüche 6 bis 7, wobei die Sicherheitseinrichtung (12)
- aus der erfassten oder abgeleiteten Fahrgeschwindigkeit (VM) der Aufzugskabine die zweite Beschleunigung (AM) der Aufzugskabine (2) ableitet, und
- in einer zweiten Vergleichsroutine (22) die vom ersten Bewegungssensor (13) erfasste Beschleunigung (AS) mit der vom zweiten Bewegungssensor (14) abgeleiteten zweiten Beschleunigung (AM) vergleicht, und bei Vorliegen einer Übereistimmung der beiden Beschleunigungen (AS, AM) das OK-Signal (R2) erzeugt, und die erste Integrationsroutine (15) das OK-Signal zur Freigabe der Integration verwendet, oder die Sicherheitseinrichtung (12) die Sicherheitsmassnahme (27) auslöst, wenn die Differenz (dA)zwischen den beiden Beschleunigungen (AS, AM) den Beschleunigungs-Differenzgrenzwert überschreitet, bzw. wenn das OK-Signal (R2) nicht ausgegeben wird.

9. Sicherheitseinrichtung (12) gemäss Anspruch 8, wobei die Sicherheitseinrichtung (12) in einer dritten Vergleichsroutine (23) die vom zweiten Bewegungssensor (14) abgeleitete zweite Beschleunigung (AM) mit der vom ersten Bewegungssensor (13) erfassten Beschleunigung (AS) vergleicht, und die Sicherheitseinrichtung (12) die Sicherheitsmassnahme (27) auslöst, wenn eine Differenz zwischen den beiden Beschleunigungen (AM, AS) den Beschleunigungs-Differenzgrenzwert überschreitet.

10. Sicherheitseinrichtung (12) gemäss einem der Ansprüche 5 bis 9, wobei ein zweites Überwachungsmodul (19) der Sicherheitseinrichtung (12), die vom zweiten Bewegungssensor (14) erfasste oder von diesem abgeleitete Fahrgeschwindigkeit (VM) mit mindestens einer vorgegebenen Grenzgeschwindigkeit (VG2) vergleicht und welches zweite Überwachungsmodul bei Überschreitung der vorgegebenen Grenzgeschwindigkeit (VG2) die Sicherheitsmassnahme (27) auslöst.

11. Sicherheitseinrichtung (12) gemäss einem der Ansprüche 9 oder 10, wobei eine vierte Vergleichsroutine (24) der Sicherheitseinrichtung (12) die vom zweiten Bewegungssensor (14) erfasste oder abgeleitete Fahrgeschwindigkeit (VM) mit der von der Integrationsroutine (15) integrierten Fahrgeschwindigkeit (VS) vergleicht und eine Warn- oder Sicherheitsmassnahme (27) auslöst,
- wenn die Differenz zwischen den beiden Fahrgeschwindigkeiten (VS, VM) den Warngrenzwert überschreitet, oder
- wenn ein zeitlicher Verlauf der Differenz zwischen den beiden Fahrgeschwindigkeiten (VS, VM) einen Alarmwert überschreitet.

12. Sicherheitseinrichtung (12) gemäss einem der Ansprüche 10 oder 11, wobei ein drittes Überwachungsmodul (20) der Sicherheitseinrichtung (12), die vom ersten Bewegungssensor (13) erfasste Beschleunigung (AS) der Aufzugskabine (2) mit mindestens einer vorgegebenen Grenzbeschleunigung (AG) vergleicht und welches bei Überschreitung der vorgegebenen Grenzbeschleunigung (AG) eine Sicherheitsmassnahme (27) auslöst.

13. Sicherheitseinrichtung (12) gemäss einem der Ansprüche 9 bis 12 mit einer ersten Prozessoreinheit (25) und einer zweiten Prozessoreinheit (26), wobei die erste Prozessoreinheit (25) zum ersten Bewegungssensor (13) verbunden ist und die zweite Prozessoreinheit (26) zum zweiten Bewegungssensor (14) verbunden ist, und wobei Vergleichsroutinen, Überwachungsmodule und weitere Rechenroutinen auf die beiden Prozessoreinheiten (25, 26) aufgeteilt sind.

14. Sicherheitseinrichtung (12) gemäss Anspruch 13, wobei die erste Prozessoreinheit (25) zumindest die Schnittstelle zum ersten Bewegungssensor (13), die Integrationsroutine (15), das erste Überwachungsmodul (18) sowie Bedarfsweise die erste Vergleichsroutine (21), die zweite Vergleichsroutine (22) und das dritte Überwachungsmodul (20) beinhaltet und die zweite Prozessoreinheit (26) zumindest die Schnittstelle zum zweiten Bewegungssensor (14), erforderliche Rechenroutinen (14.3, 17) zur Ableitung der vom zweiten Bewegungssensor (14) erfassten Signale, sowie Bedarfsweise die dritte Vergleichsroutine(23), die vierte Vergleichsroutine (24) und das zweite Überwachungsmodul (19) beinhaltet.

15. Sicherheitseinrichtung (12) gemäss einem der Ansprüche 5 bis 14, wobei der zweite Bewegungssensor (14) im Bereiche einer Aufzugskabinenrolle, vorzugsweise einer auf der Kabine (2) angeordneter Tragmittelumlenkrolle (5), angeordnet ist und von dieser angetrieben ist, und die Fahrgeschwindigkeit (VM) oder der Fahrweg (SM) der Aufzugskabine (2) aus einer Drehbewegung der Aufzugskabinenrolle oder der Tragmittelumlenkrolle (5) erfasst wird.

16. Sicherheitseinrichtung (12) gemäss Anspruch 15, wobei die Sicherheitseinrichtung (12) eine erste Sicherheitseinrichtung und eine zweite Sicherheitseinrichtung umfasst, welche erste Sicherheitseinrichtung nach einem der Ansprüche 5 bis 15 ausgeführt ist und im Bereiche einer ersten Tragmittelumlenkrolle (5.1) der Aufzugskabine (2) angeordnet ist und die zweite Sicherheitseinrichtung nach einem der Ansprüche 5 bis 15 ausgeführt ist und im Bereiche einer zweiten Tragmittelumlenkrolle (5.2) der Aufzugskabine (2) angeordnet ist.

## Claims

1. Method for monitoring the movement of the elevator car, comprising the steps of:
- detecting an acceleration (AS) of the elevator car,
- detecting a travel speed (VM) or a travel path (SM) of the elevator car, wherein, if necessary, when the travel path (SM) of the elevator car is being detected, the travel speed (VM) is derived from the detected travel path (SM) of the elevator car,
- determining an integrated travel speed (VS) by integrating the detected acceleration (AS) of the elevator car, wherein the detected or derived travel speed (VM) is used as the starting variable of an integration cycle, and
- comparing the integrated travel speed (VS) with at least one predetermined threshold speed (VG), and triggering a safety measure (27) if it is established that the predetermined threshold speed (VG) has been exceeded.

2. Method according to claim 1, wherein the integrated travel speed (VS) is compared with the detected or derived travel speed (VM) and a new integration cycle is started if a difference (dV) between the integrated travel speed (VS) and the detected or derived travel speed (VM) exceeds a first difference threshold value or if a duration of the current integration cycle exceeds a predefined time span.

3. Method according to either claim 1 or claim 2, wherein the integrated travel speed (VS) is compared with the detected or derived travel speed (VM) and a warning or safety measure (27) is triggered,
- if a difference between the integrated travel speed (VS) and the detected or derived travel speed (VM) exceeds a warning threshold value, and/or
- if a temporal course of the difference between the integrated travel speed (VS) and the detected or derived travel speed (VM) exceeds an alarm value.

4. Method according to any of claims 1 to 3, wherein
- a second acceleration (AM) of the elevator car is derived from the detected or derived travel speed (VM) of the elevator car, and
- the detected acceleration (AS) is compared with the second acceleration (AM) derived from the detected or derived travel speed (VM) of the elevator car, and if the two accelerations (AS, AM) match, an OK signal (R2) is generated, and said OK signal is used to enable further integration, or the safety measure (27) is triggered if a difference (dA) between the detected acceleration (AS) and the second acceleration (AM) exceeds an acceleration difference threshold value, or if the OK signal is not emitted.

5. Safety device (12) of an elevator system (1) for monitoring the movement of the elevator car (2) according to any of the methods from claims 1 to 4, comprising:
- a first movement sensor (13) for detecting the acceleration (AS) of the elevator car (2),
- a second movement sensor (14, 14.1, 14.2) for detecting the travel speed (VM) or the travel path (SM) of the elevator car (2), wherein, if necessary, during detection of the travel path (SM) of the elevator car (2), the travel speed (VM) is derived from the travel path (SM) of the elevator car (2) detected by the second movement sensor (14.2),
- an integration routine (15), which determines the integrated travel speed (VS) from the acceleration (AS) of the elevator car (2) detected by the first movement sensor (13), wherein the integration routine (15) uses the travel speed (VM) detected or derived by the second movement sensor (14) as the starting variable of an integration cycle,
- and a first monitoring module (18), which compares the integrated travel speed (VS) with at least one predetermined threshold speed (VG) and which triggers the safety measure (27) when the predetermined threshold speed (VG) is exceeded.

6. Safety device (12) according to claim 5, wherein a first comparison routine (21) of the safety device (12) compares the travel speed (VS) integrated by the integration routine (15) with the travel speed (VM) detected or derived by the second movement sensor (14) and starts a new integration cycle if the difference between the two travel speeds (VM, VS) exceeds the first difference threshold value or if the duration of the current integration cycle exceeds the predefined time span.

7. Safety device (12) according to claim 6, wherein the first comparison routine (21) of the safety device (12) compares the travel speed (VS) integrated by the first integration routine (15) with the travel speed (VM) detected or derived by the second movement sensor (14) and triggers the warning or safety measure (27),
- if the difference (dV) between the two travel speeds (VM, VS) exceeds the warning threshold value, or
- if the temporal course of the difference between the two travel speeds (VM, VS) exceeds the alarm value.

8. Safety device (12) according to either claim 6 or claim 7, wherein the safety device (12)
- derives the second acceleration (AM) of the elevator car (2) from the detected or derived travel speed (VM) of the elevator car, and
- in a second comparison routine (22), compares the acceleration (AS) detected by the first movement sensor (13) with the second acceleration (AM) derived by the second movement sensor (14), and if the two accelerations (AS, AM) match, the OK signal (R2) is generated, and the first integration routine (15) uses the OK signal to enable the integration, or the safety device (12) triggers the safety measure (27) if the difference (dA) between the two accelerations (AS, AM) exceeds the acceleration difference threshold value, or if the OK signal (R2) is not emitted.

9. Safety device (12) according to claim 8, wherein the safety device (12), in a third comparison routine (23), compares the second acceleration (AM) derived by the second movement sensor (14) with the acceleration (AS) detected by the first movement sensor (13), and the safety device (12) triggers the safety measure (27) if a difference between the two accelerations (AM, AS) exceeds the acceleration difference threshold value.

10. Safety device (12) according to any of claims 5 to 9, wherein a second monitoring module (19) of the safety device (12) compares the travel speed (VM) detected or derived by the second movement sensor (14) with at least one predetermined threshold speed (VG2) and triggers the safety measure (27) if the predetermined threshold speed (VG2) is exceeded.

11. Safety device (12) according to either claim 9 or claim 10, wherein a fourth comparison routine (24) of the safety device (12) compares the travel speed (VM) detected or derived by the second movement sensor (14) with the travel speed (VS) integrated by the integration routine (15) and triggers a warning or safety measure (27),
- if the difference between the two travel speeds (VS, VM) exceeds the warning threshold value, or
- if a temporal course of the difference between the two travel speeds (VS, VM) exceeds an alarm value.

12. Safety device (12) according to either 10 or claim 11, wherein a third monitoring module (20) of the safety device (12) compares the acceleration (AS) of the elevator cabin (2) detected by the first movement sensor (13) with at least one predetermined threshold acceleration (AG) and triggers a safety measure (27) if the predetermined threshold acceleration (AG) is exceeded.

13. Safety device (12) according to any of claims 9 to 12, comprising a first processor unit (25) and a second processor unit (26), wherein the first processor unit (25) is connected to the first movement sensor (13) and the second processor unit (26) is connected to the second movement sensor (14), and wherein comparison routines, monitoring modules and further calculation routines are distributed among the two processor units (25, 26).

14. Safety device (12) according to claim 13, wherein the first processor unit (25) comprises at least the interface to the first movement sensor (13), the integration routine (15), the first monitoring module (18) and, if necessary, the first comparison routine (21), the second comparison routine (22) and the third monitoring module (20), and the second processor unit (26) comprises at least the interface to the second movement sensor (14), required calculation routines (14.3, 17) for deriving the signals detected by the second movement sensor (14) and, if necessary, the third comparison routine (23), the fourth comparison routine (24) and the second monitoring module (19).

15. Safety device (12) according to any of claims 5 to 14, wherein the second movement sensor (14) is arranged in the region of an elevator car pulley, preferably a support-means deflection pulley (5) arranged on the car (2), and is driven by said pulley, and the travel speed (VM) or the travel path (SM) of the elevator car (2) is detected from a rotational movement of the elevator car pulley or support-means deflection pulley (5).

16. Safety device (12) according to claim 15, wherein the safety device (12) comprises a first safety device and a second safety device, which first safety device is designed according to any of claims 5 to 15 and is arranged in the region of a first support-means deflection pulley (5.1) of the elevator car (2) and the second safety device is designed according to any of claims 5 to 15 and is arranged in the region of a second support-means deflection pulley (5.2) of the elevator car (2).

## Revendications

1. Procédé de surveillance du mouvement de la cabine d'ascenseur, le procédé comprenant les étapes de :
- détection d'une accélération (AS) de la cabine d'ascenseur,
- détection d'une vitesse de déplacement (MV) ou d'un trajet (SM) de la cabine d'ascenseur, en cas de nécessité, lorsque le trajet (SM) de la cabine d'ascenseur est détecté, la vitesse de déplacement (VM) étant dérivée à partir du trajet détecté (SM) de la cabine d'ascenseur,
- détermination d'une vitesse de déplacement intégrée (VS) par intégration de l'accélération détectée (AS) de la cabine d'ascenseur, la vitesse de déplacement (VM) détectée ou dérivée étant utilisée comme grandeur initiale d'un cycle d'intégration, et
- comparaison de la vitesse de déplacement intégrée (VS) avec au moins une vitesse limite prédéterminée (VG), et de déclenchement d'une mesure de sécurité (27) lorsqu'un dépassement de la vitesse limite prédéterminée (VG) est détectée.

2. Procédé selon la revendication 1, dans lequel la vitesse de déplacement intégrée (VS) est comparée à la vitesse de déplacée détectée ou dérivée (VM) et un nouveau cycle d'intégration est démarré lorsque la différence (dV) entre la vitesse de déplacement intégrée (VS) et la vitesse de déplacement détectée ou dérivée (VM) devient supérieure à une première valeur limite de différence ou lorsqu'une durée du cycle d'intégration actuel devient supérieure à un intervalle de temps prédéterminé.

3. Procédé selon la revendication 1 ou 2, dans lequel la vitesse de déplacement intégrée (VS) est comparée à la vitesse de déplacement détectée ou dérivée (VM) et une mesure de sécurité ou d'avertissement (27) est déclenchée,
- lorsque la différence entre la vitesse de déplacement intégrée (VS) et la vitesse de déplacement détectée ou dérivée (VM) devient supérieure à une valeur limite d'avertissement et/ou
- lorsque la variation dans le temps de la différence entre la vitesse de déplacement intégrée (VS) et la vitesse de déplacement détectée ou dérivée (VM) devient supérieure à une valeur d'alarme.

4. Procédé selon l'une des revendications 1 à 3, dans lequel
- une deuxième accélération (AM) de la cabine d'ascenseur est dérivée à partir de la vitesse de déplacement détectée ou dérivée (VM) de la cabine d'ascenseur, et
- l'accélération détectée (AS) est comparée à la deuxième accélération (AM) dérivée de la vitesse de déplacement détectée ou dérivée (VM) de la cabine d'ascenseur, et un signal OK (R2) est généré en cas de coïncidence des deux accélérations (AS, AM), et ce signal OK est utilisé pour autoriser la poursuite de l'intégration, ou la mesure de sécurité (27) est déclenchée lorsque la différence (dA) entre l'accélération détectée (AS) et la deuxième accélération (AM) devient supérieure à une valeur limite de différence d'accélération ou lorsque le signal OK n'est pas délivré.

5. Dispositif de sécurité (12) d'un système d'ascenseur (1), destiné à surveiller le déplacement de la cabine d'ascenseur (2) selon l'un des procédés des revendications 1 à 4, le dispositif comprenant :
- un premier capteur de déplacement (13) destiné à détecter l'accélération (AS) de la cabine d'ascenseur (2),
- un deuxième capteur de déplacement (14, 14.1, 14.2), destiné à détecter la vitesse de déplacement (VM) ou le trajet (SM) de la cabine d'ascenseur (2), en cas de nécessité, lorsque le trajet (SM) de la cabine d'ascenseur est détecté, la vitesse de déplacement (VM) étant dérivée à partir du trajet (SM) de la cabine d'ascenseur détecté par le deuxième capteur de déplacement (14.2),
- un sous-programme d'intégration (15) qui détermine la vitesse de déplacement intégrée (VS) à partir de l'accélération (AS) de la cabine d'ascenseur (2) détectée par le premier capteur de déplacement (13), le sous-programme d'intégration (15) utilisant la vitesse de déplacement (VM) dérivée ou détectée par le deuxième capteur de déplacement (14) comme grandeur initiale d'un cycle d'intégration,
- et un premier module de surveillance (18) qui compare la vitesse de déplacement intégrée (VS) à au moins une vitesse limite prédéterminée (VG) et qui déclenche la mesure de sécurité (27) en cas de dépassement de la vitesse limite prédéterminée (VG).

6. Dispositif de sécurité (12) selon la revendication 5, dans lequel un premier sous-programme de comparaison (21) du dispositif de sécurité (12) compare la vitesse de déplacement (VS), intégrée par le sous-programme d'intégration (15), avec la vitesse de déplacement (VM) dérivée ou détectée par le deuxième capteur de déplacement (14) et démarre un nouveau cycle d'intégration lorsque la différence entre les deux vitesses de déplacement (VM, VS) devient supérieure à la première valeur limite de différence ou lorsque la durée du cycle d'intégration actuel devient supérieure à l'intervalle de temps prédéterminé.

7. Dispositif de sécurité (12) selon la revendication 6, dans lequel le premier sous-programme de comparaison (21) du dispositif de sécurité (12) compare la vitesse de déplacement (VS), intégrée par le premier sous-programme d'intégration (15), à la vitesse de déplacement (VM) dérivée ou détectée par le deuxième capteur de déplacement (14) et déclenche la mesure de sécurité ou d'avertissements (27),
- lorsque la différence (dV) entre les deux vitesses de déplacement (VM, VS) devient supérieure à la valeur de seuil d'avertissement, ou
- lorsque la variation dans le temps de la différence entre les deux vitesses (VM, VS) devient supérieure à la valeur d'alarme.

8. Dispositif de sécurité (12) selon l'une des revendications 6 à 7, le dispositif de sécurité (12)
- dérivant la deuxième accélération (AM) de la cabine d'ascenseur (2) à partir de la vitesse de déplacement détectée ou dérivée (VM) de la cabine d'ascenseur, et
- comparant, dans un deuxième sous-programme de comparaison (22), l'accélération (AS), détectée par le premier capteur de déplacement (13), à la deuxième accélération (AM) dérivée par le deuxième capteur de déplacement (14), et générant le signal OK (R2) en cas de coïncidence des deux accélérations (AS, AM), et le premier sous-programme d'intégration (15) utilisant le signal OK pour autoriser l'intégration, ou le dispositif de sécurité (12) déclenchant la mesure de sécurité (27) lorsque la différence (dA) entre les deux accélération (AS, AM) devient supérieure à la valeur limite de différence d'accélération ou lorsque le signal OK (R2) n'est pas délivré.

9. Dispositif de sécurité (12) selon la revendication 8, le dispositif de sécurité (12) comparant, dans un troisième sous-programme de comparaison (23), la deuxième accélération (AM) dérivée par le deuxième capteur de déplacement (14), à l'accélération (AS) détectée par le premier capteur de mouvement (13) et le dispositif de sécurité (12) déclenchant la mesure de sécurité (27) lorsque la différence entre les deux accélérations (AM, AS) devient supérieure à la valeur limite de différence d'accélération.

10. Dispositif de sécurité (12) selon l'une des revendications 5 à 9, dans lequel un deuxième module de surveillance (19) du dispositif de sécurité (12) compare la vitesse de déplacement (VM), détectée par le deuxième capteur de déplacement (14) ou dérivée par celui-ci, à au moins une vitesse limite prédéterminée (VG2) et le deuxième module de surveillance déclenche la mesure de sécurité (27) en cas de dépassement de la vitesse limite prédéterminée (VG2).

11. Dispositif de sécurité (12) selon l'une des revendications 9 ou 10, dans lequel un quatrième sous-programme de comparaison (24) du dispositif de sécurité (12) compare la vitesse de déplacement (VM), détectée ou dérivée par le deuxième capteur de déplacement (14), à la vitesse de déplacement (VS) intégrée par le sous-programme d'intégration (15) et déclenche une mesure de sécurité d'ou avertissement (27),
- lorsque la différence entre les deux vitesses (VS, VM) devient supérieure à la valeur limite d'avertissement, ou
- lorsque la variation dans le temps de la différence entre les deux vitesses (VS, VM) devient supérieure à une valeur d'alarme.

12. Dispositif de sécurité (12) selon l'une des revendications 10 ou 11, dans lequel un troisième module de surveillance (20) du dispositif de sécurité (12) compare l'accélération (AS) de la cabine d'ascenseur (2), détectée par le premier capteur de déplacement (13), à au moins une accélération limite prédéterminée (AG) et déclenche une mesure de sécurité (27) en cas de dépassement de l'accélération limite prédéterminée (AG).

13. Dispositif de sécurité (12) selon l'une des revendications 9 à 12, comprenant une première unité de traitement (25) et une deuxième unité de traitement (26), la première unité de traitement (25) étant reliée au premier capteur de déplacement (13) et la deuxième unité de traitement (26) étant reliée au deuxième capteur de déplacement (14), et des sous-programmes de comparaison, des modules de surveillance et d'autres sous-programmes de calcul étant répartis entre les deux unités de traitement (25, 26).

14. Dispositif de sécurité (12) selon la revendication 13, dans lequel la première unité de traitement (25) comporte au moins l'interface avec le premier capteur de déplacement (13), le sous-programme d'intégration (15), le premier module de surveillance (18) et, si nécessaire, le premier sous-programme de comparaison (21), le deuxième sous-programme de comparaison (22) et le troisième module de surveillance (20), et la deuxième unité de traitement (26) comporte au moins l'interface avec le deuxième capteur de déplacement (14), les sous-programmes de calcul (14.3, 17) nécessaire à la dérivation des signaux détectés par le deuxième capteur de déplacement (14) ainsi que, si nécessaire, le troisième sous-programme de comparaison (23), le quatrième sous-programme de comparaison (24) et le deuxième module de surveillance (19).

15. Dispositif de sécurité (12) selon l'une des revendications 5 à 14, dans lequel le deuxième capteur de déplacement (14) est disposé au niveau d'une poulie de cabine d'ascenseur, de préférence au niveau d'une poulie de renvoi de moyen de traction (5), disposée sur la cabine, et est entraîné par celle-ci, et la vitesse de déplacement (VM) ou le trajet (SM) de la cabine d'ascenseur (2) est détecté à partir d'un mouvement de rotation de la poulie de cabine d'ascenseur ou de la poulie de renvoi de moyen de traction (5).

16. Dispositif de sécurité (12) selon la revendication 15, le dispositif de sécurité (12) comprenant un premier dispositif de sécurité et un deuxième dispositif de sécurité, lequel premier dispositif de sécurité est réalisé selon l'une des revendications 5 à 15 et est disposé au niveau d'une première poulie de renvoi de moyen de traction (5.1) de la cabine d'ascenseur (2) et lequel deuxième dispositif de sécurité est réalisé selon l'une des revendications 5 à 15, et est disposé au niveau d'une deuxième poulie de renvoi de moyen de traction (5.2) de la cabine d'ascenseur (2).
